# EUROPEAN PATENT APPLICATION

(11) **EP 4 769 676 A1**
(43) Date of publication of application: **01.07.2026**
(21) Application number: 25845373.7
(22) Date of filing: 21.07.2025
(51) Int. Cl.: H01M 10/658, H01M 10/6557, H01M 10/613, H01M 10/625

(54) **BATTERY CELL, AND BATTERY PACK AND VEHICLE INCLUDING SAME**

(30) Priority: 23.07.2024 KR 20240097262
(71) Applicant: LG Energy Solution, Ltd., Seoul 07335 (KR)
(72) Inventor: PARK, Shin-Young, Daejeon 34122 (KR); MUN, Jeong-O, Daejeon 34122 (KR); SEO, Sung-Won, Daejeon 34122 (KR)
(74) Representative: Plasseraud IP
(86) International application number: PCT/KR2025/010735
(87) International publication number: WO 2026/024026

(57) **Abstract**

A battery cell according to the present disclosure includes an electrode assembly including a positive electrode, a negative electrode and a separator stacked along a stacking direction; a cell case accommodating the electrode assembly; and a thermal insulator disposed on one remaining side of the cell case except two side portions in the stacking direction of the electrode assembly, the thermal insulator including a thermal insulation material, wherein the cell case includes a contact portion disposed at a different location from a location of the thermal insulator, the contact portion configured to contact a cooler.

## Description

### TECHNICAL FIELD

The present disclosure relates to a battery cell, and a battery pack and a vehicle including the same, and more particularly, to a battery cell for maintaining cooling performance in normal conditions and effectively slowing down and preventing thermal propagation when a thermal event occurs, and a battery pack and a vehicle including the same.

This application is based on and claims priority from Korean Patent Application No. 10-2024-0097262 filed on July 23, 2024, the disclosure of which is incorporated herein in its entirety by reference.

### BACKGROUND ART

Due to being easily applicable to different types of products and having electrical properties such as high energy density, secondary batteries are universally applied to not only portable devices but also electric vehicles (EV) or hybrid electric vehicles (HEV) that operate using electrical driving sources. Secondary batteries significantly reduce the use of fossil fuels, and in addition to the primary advantage, they do not generate by-products from the use of energy. From this perspective, secondary batteries are gaining attention as a new source of energy with improved eco-friendliness and higher energy efficiency.

The types of secondary batteries that are now used in a wide range of applications include lithium ion batteries, lithium polymer batteries, nickel cadmium batteries, nickel hydrogen batteries or nickel zinc batteries. When high output voltage is required, a plurality of battery cells may be connected in series to form a battery module or a battery pack. In addition, to increase the charge/discharge capacity, a plurality of battery cells may be connected in parallel to form a battery module or a battery pack. Accordingly, the number of battery cells included in the battery module or pack may be variously set according to the required output voltage or charge/discharge capacity.

When forming the battery pack by connecting the plurality of battery cells in series/in parallel, it is general to form a battery module including at least one battery cell and then form a battery pack or a battery rack using at least one battery module with an addition of other elements. Alternatively, recently, cell-to-pack type battery packs are manufactured by placing the plurality of battery cells directly in a pack housing without modularization.

However, the battery pack including the plurality of battery cells may be vulnerable to thermal chain reactions between the battery cells or battery modules. For example, when a thermal event such as thermal runaway occurs in any one battery cell, the thermal event may propagate to other battery cell or battery module. When thermal runaway propagation is not properly suppressed, the thermal event occurred in the specific battery cell may trigger a chain reaction in other battery cell or battery module, potentially causing explosions or fires.

As the existing battery cell simply has a structure in which an electrode assembly is encased in a cell case, no problems arise in normal conditions, but when a thermal event such as a battery cell fire occurs, the electrode assembly within the battery cell is exposed to high temperature, making it very difficult to slow down and prevent thermal propagation.

Therefore, there is an urgent need for development of battery cells for maintaining cooling performance in normal conditions or situations and effectively slowing down and preventing thermal propagation when thermal events occur.

### DISCLOSURE

### Technical Problem

The present disclosure is designed to address the above-described problems, and therefore the present disclosure is directed to providing a battery cell for minimizing the surface area of an electrode assembly exposed to high temperature, and a battery pack and a vehicle including the same.

The present disclosure is further directed to providing a battery cell for minimizing the time until the exposure of an electrode assembly to high temperature, and a battery pack and a vehicle including the same.

The present disclosure is further directed to providing a battery cell for effectively slowing down and preventing thermal propagation, and a battery pack and a vehicle including the same.

The present disclosure is further directed to providing a battery cell for maintaining cooling performance, and a battery pack and a vehicle including the same.

The present disclosure is further directed to providing a battery cell for improving thermal insulation performance, and a battery pack and a vehicle including the same.

The present disclosure is further directed to providing a battery cell with improved durability and rigidity, and a battery pack and a vehicle including the same.

The technical problems to be solved by the present disclosure are not limited to the above-described problems, and these and other problems will be clearly understood by those skilled in the art from the following description.

### Technical Solution

A battery cell according to the present disclosure includes an electrode assembly including a positive electrode, a negative electrode and a separator stacked along a stacking direction; a cell case accommodating the electrode assembly; and a thermal insulator disposed on one remaining side of the cell case except two side portions in the stacking direction of the electrode assembly, the thermal insulator including a thermal insulation material, wherein the cell case includes a contact portion disposed at a different location from a location of the thermal insulator, the contact portion configured to contact a cooler.

The thermal insulator may have a predetermined thickness.

The thermal insulator may be disposed on top of the cell case.

The contact portion may be disposed on bottom of the cell case.

The thermal insulator may be disposed on bottom of the cell case.

The contact portion may be disposed on top of the cell case.

The thermal insulator may be disposed on top and bottom of the cell case.

The contact portion may be disposed on at least one of the two side portions of the cell case in the stacking direction of the electrode assembly.

The thermal insulator may be disposed on an inner side of the cell case.

The thermal insulator may be disposed on an outer side of the cell case.

The thermal insulator may be provided in a shape of a tape.

The thermal insulator may include at least one material of mica, aerogel or silicone.

A battery pack according to the present disclosure includes at least one battery cell according to the present disclosure.

A battery pack according to the present disclosure includes at least one first battery cell and at least one second battery cell, each battery cell including an electrode assembly including a positive electrode, a negative electrode and a separator stacked along a stacking direction; and a cell case accommodating the electrode assembly, wherein any one of the first battery cell and the second battery cell includes a thermal insulator disposed on one remaining side of the cell case except two side portions in the stacking direction, the thermal insulator including a thermal insulation material, and wherein the cell case of the any one of the first battery cell and the second battery cell includes a contact portion disposed at a different location from a location of the thermal insulator, the contact portion configured to contact a cooler.

A battery pack according to the present disclosure includes at least one first battery cell and at least one second battery cell, each battery cell including an electrode assembly including a positive electrode, a negative electrode and a separator stacked along a stacking direction; a cell case accommodating the electrode assembly; and a thermal insulator disposed on one remaining side of the cell case except two side portions in the stacking direction, the thermal insulator including a thermal insulation material, wherein the thermal insulator of the first battery cell and the thermal insulator of the second battery cell are disposed at different locations, and wherein the cell case of each of the first battery cell and the second battery cell includes a contact portion disposed at a different location from the location of the thermal insulator, the contact portion configured to contact a cooler.

A vehicle according to the present disclosure includes at least one battery pack according to the present disclosure.

### Advantageous Effects

According to the present disclosure, by the thermal insulator, it may be possible to provide the battery cell for minimizing the surface area of the electrode assembly exposed to high temperature, and the battery pack and the vehicle including the same.

In addition, by the thermal insulator, it may be possible to provide the battery cell for minimizing the time until the exposure of the electrode assembly to high temperature, and the battery pack and the vehicle including the same.

In addition, by the thermal insulator, it may be possible to provide the battery cell for effectively slowing down and preventing thermal propagation, and the battery pack and the vehicle including the same.

In addition, by the thermal insulator disposed on one remaining side of the cell case except two side portions, it may be possible to provide the battery cell for maintaining cooling performance, and the battery pack and the vehicle including the same.

In addition, by the cooler disposed at a different location from the thermal insulator, it may be possible to provide the battery cell for maintaining cooling performance, and the battery pack and the vehicle including the same.

In addition, by the thermal insulator, it may be possible to provide the battery cell for improving thermal insulation performance, and the battery pack and the vehicle including the same.

In addition, by the thermal insulator, it may be possible to provide the battery cell with improved durability and rigidity, and the battery pack and the vehicle including the same.

The effects of the present disclosure are not limited to the above-described effects, and these and other effects will be clearly understood by those skilled in the art from this specification and the accompanying drawings.

### BRIEF DESCRIPTION OF THE DRAWINGS

The accompanying drawings illustrate embodiments of the present disclosure and together with the following detailed description, serve to provide a better understanding of the technical aspects of the present disclosure, and thus the present disclosure should not be constructed as being limited to any of the drawings.
FIG. 1 is a perspective view showing a battery cell according to the present disclosure, exclusive of a thermal insulator.
FIG. 2 is a perspective view showing an entire battery cell according to an embodiment of the present disclosure.
FIG. 3 is a perspective view showing a cooler positioned on bottom of a battery cell according to an embodiment of the present disclosure.
FIG. 4 is a perspective view showing an entire battery cell according to a variation to an embodiment of the present disclosure.
FIG. 5 is a perspective view showing a cooler positioned on top of a battery cell according to a variation to an embodiment of the present disclosure.
FIG. 6 is a perspective view showing an entire battery cell according to another variation to an embodiment of the present disclosure.
FIG. 7 is a perspective view showing a cooler positioned on a side portion of a battery cell according to another variation to an embodiment of the present disclosure.
FIG. 8 is a perspective view showing a thermal insulator present on an inner side of a cell case in a battery cell according to an embodiment of the present disclosure.
FIG. 9 is an exploded perspective view showing a tape-type thermal insulator in a battery cell according to still another variation to an embodiment of the present disclosure.
FIG. 10 is a side cross-sectional view showing a thermal insulator positioned in close contact with a folding portion of a cell case in a battery cell according to an embodiment of the present disclosure.
FIG. 11 is a perspective view showing a battery pack according to an embodiment of the present disclosure.
FIG. 12 is a side cross-sectional view showing a battery pack according to another embodiment of the present disclosure.
FIG. 13 is a side cross-sectional view showing a battery pack according to still another embodiment of the present disclosure.
FIG. 14 is a diagram showing a vehicle according to an embodiment of the present disclosure.

### BEST MODE

Hereinafter, embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are embodiments of the present disclosure to describe the technical aspects of the present disclosure and are not intended to be limiting, so it should be understood that a variety of other equivalents and modifications could be made thereto at the time the application was filed.

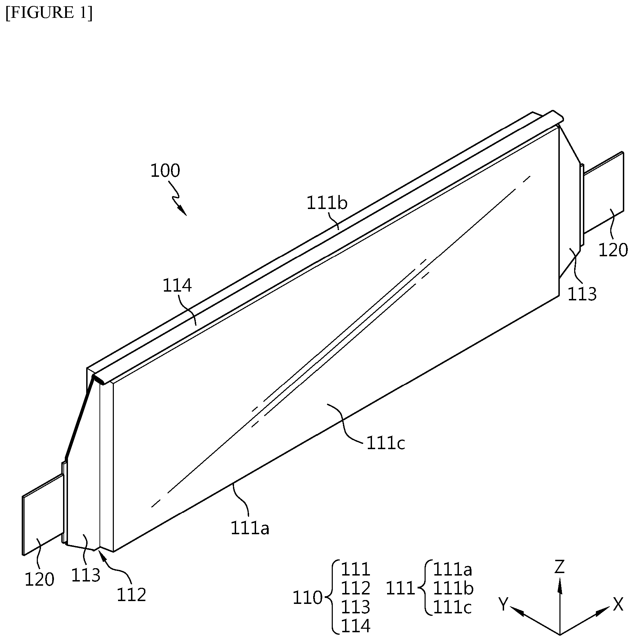

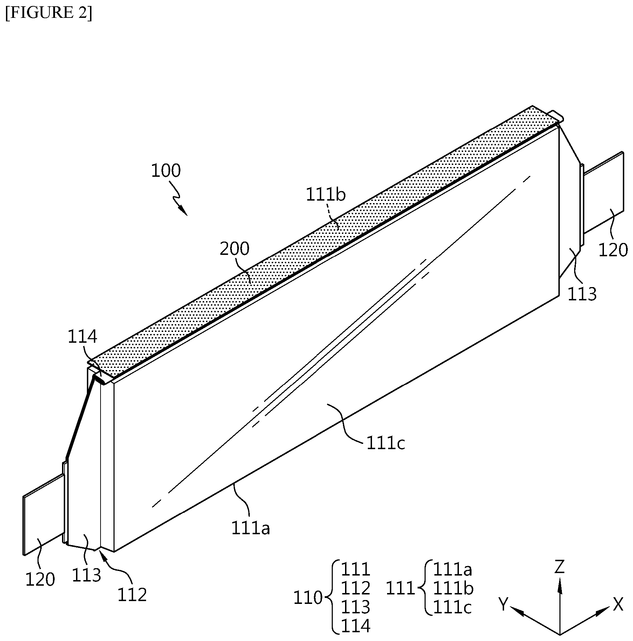

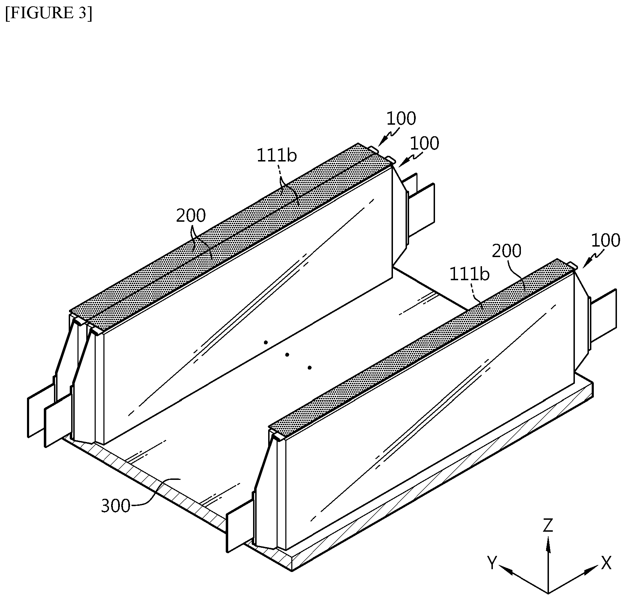

FIG. 1 is a perspective view showing a battery cell according to the present disclosure, exclusive of a thermal insulator, FIG. 2 is a perspective view showing the entire battery cell according to an embodiment of the present disclosure, and FIG. 3 is a perspective view showing a cooler positioned on bottom of the battery cell according to an embodiment of the present disclosure.

Hereinafter, the battery cell 100 according to an embodiment of the present disclosure will be described in detail with reference to FIGS. 1 to 3. The battery cell 100 according to an embodiment of the present disclosure may include an electrode assembly, a cell case 110 and the thermal insulator 200.

The electrode assembly may include a stack of a positive electrode, a negative electrode and a separator. The positive electrode, the negative electrode and the separator may be stacked along a stacking direction. For example, the positive electrode, the negative electrode and the separator may be stacked in Y-axis direction, and may be repeatedly stacked in a sequential order.

The cell case 110 may accommodate the electrode assembly. The electrode assembly may be housed in the cell case 110. The cell case 110 may have a housing portion 111.

The electrode assembly may be housed in the housing portion 111. The housing portion 111 may be provided in a three-dimensional shape having a predetermined length, width and height in X, Y, and Z directions, respectively. The housing portion 111 may include a lower end portion 11la, an upper end portion 111b and a side portion 111c. The lower end portion 111a may be a -Z-side part of the housing portion 111. The upper end portion 111b may be a +Z-side part of the housing portion 111. The side portion 111c may be present on side sides of the cell case 110 in the stacking direction. Specifically, each of the side portions 111c may be present on each of the two sides of the cell case 110 in the same direction as the stacking direction of the positive electrode, the negative electrode and the separator of the electrode assembly. For example, the side portions 111c may be -Y-side and +Y-side parts of the housing portion 111.

The thermal insulator 200 may be disposed on the cell case 110. The thermal insulator 200 may be disposed on one remaining side of the cell case 110 except the two side portions 111c. Specifically, the thermal insulator 200 may be disposed on at least one side of the housing portion 111 except the two side portions 111c.

The thermal insulator 200 may be disposed on the cell case in different ways or shapes. For example, the thermal insulator 200 may be separate from the cell case 110 and combined with the cell case, or may be incorporated into the cell case 110.

The thermal insulator 200 may insulate high-temperature heat. For thermal insulation, the thermal insulator 200 may include a thermal insulation material. The thermal insulation material may have thermally insulating properties.

The cell case 110 of the battery cell 100 according to the present disclosure may have a contact portion. The contact portion may be understood as a portion of the cell case 110 that contacts a cooler 300. For example, when the cooler 300 is positioned in contact with the housing portion 111 of the battery cell, the contact portion may be understood as a specific portion of the housing portion 111 that contacts the cooler 300. The cooler 300 may cool the battery cell 100. A cooling medium may flow within the cooler 300.

The contact portion may be present at a different location from the location of the thermal insulator 200. Specifically, the contact portion may be disposed at a location that overlaps or does not overlap the thermal insulator 200.

An existing battery cell simply has a structure in which the electrode assembly is encased in the cell case. The existing battery cell has no problem during the production process steps and in normal conditions while it is mounted on a vehicle, but when a thermal event such as a fire occurs in the battery cell, the electrode assembly within the cell case is exposed to high temperature, making it very difficult to slow down or prevent thermal propagation.

However, by the thermal insulator 200, the battery cell 100 according to the present disclosure may minimize the surface area of the electrode assembly exposed to high temperature and the time until the exposure of the electrode assembly to high temperature, thereby effectively slowing down and preventing thermal propagation when the thermal event occurs in the battery cell 100.

In addition, the battery cell 100 according to the present disclosure may include the thermal insulator 200 disposed on a part of the remaining portion of the cell case 110 except the two side portions 111c, and the contact portion that contacts the cooler 300 at a different location from the location of the thermal insulator 200 in the cell case 110, thereby maintaining the cooling performance of the battery cell 100 by the cooler 300 at almost similar level to that of the existing battery cell in normal conditions.

As a result, the battery cell 100 according to the present disclosure has remarkable effects of maintaining the cooling performance by the cooler 300 in normal conditions, and effectively slowing down and preventing thermal propagation when the thermal event occurs.

The thermal insulator 200 may include at least one material of mica, aerogel or silicone. Specifically, the thermal insulation material of the thermal insulator 200 may include at least one of the enumerated materials.

Because mica, aerogel or silicone is a material having good fire resistance and thermal insulation, when the thermal insulator 200 includes at least one of these materials, the thermal insulation performance of the thermal insulator 200 may be further enhanced.

The thermal insulator 200 may have a predetermined thickness. That is, the thermal insulator 200 may be provided as a component having the predetermined thickness. For example, the thermal insulator 200 may be provided in a shape of a plate having the thickness. The thermal insulator 200 may be, for example, attached and coupled to the housing portion 111 of the cell case 110, and a method of connection between the thermal insulator 200 and the housing portion 111 or a structure related to the coupling is not limited to a particular one.

As described above, when the thermal insulator 200 is provided as the component having the predetermined thickness, superior thermal insulation performance of the battery cell 100 may be achieved, and improved durability and rigidity of the battery cell 100 may be expected.

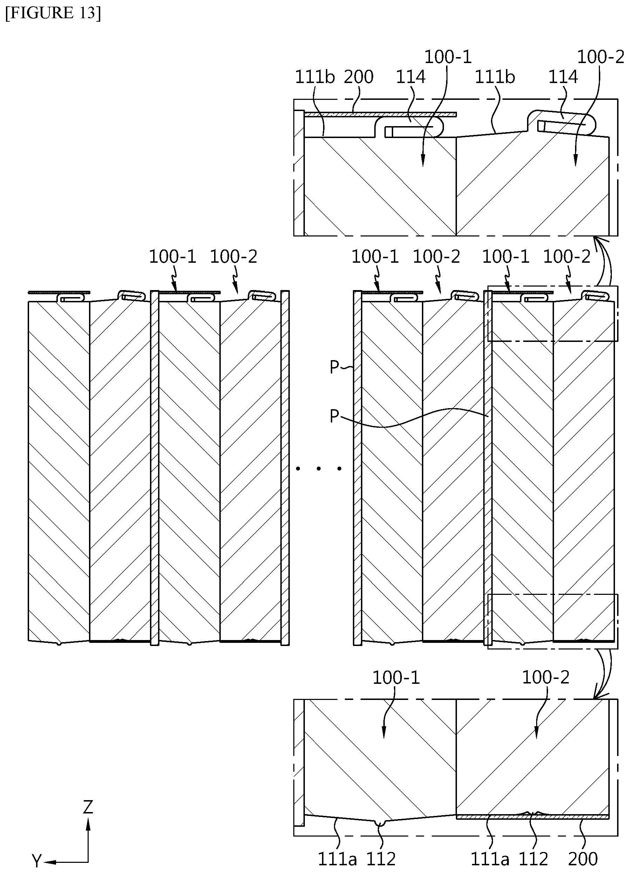

Meanwhile, the lower end portion 111a of the housing portion 111 may include a bridge 112. After the electrode assembly is placed in position within the housing portion 111 in an unfolded state, the housing portion 111 may be folded and assembled to encase the electrode assembly, and the housing portion 111 may be folded at the bridge 112 (see FIG. 13).

Meanwhile, the housing portion 111 may further include sealing portions 113, 114. The sealing portions 113, 114 may be where at least a part of the edge of the housing portion 111 is sealed. For example, the sealing portions 113, 114 may be present at two X-side end parts and a +Z-side part of the housing portion 111, excluding the lower end portion 111a of the housing portion 111. The sealing portions 113, 114 may include the terrace portion 113 and the folding portion 114. The terrace portion 113 may be configured to seal an area where an electrode lead 120 as described below is positioned. The folding portion 114 may be configured to seal the upper end portion 111b of the housing portion 111. The folding portion 114 may be provided such that parts are folded.

The thermal insulator 200 may be disposed on top of the cell case 110. Specifically, the thermal insulator 200 may be disposed on the upper end portion 111b of the housing portion 111. The thermal insulator 200 may be coupled to the upper end portion 111b of the housing portion 111.

In this case, when the thermal event occurs in the battery cell 100, the surface area of the upper part of the electrode assembly exposed to high temperature and the time until the exposure to high temperature may be minimized, thereby effectively slowing down and preventing thermal propagation, especially at the upper part of the battery cell 100.

As described above, when the thermal insulator 200 is disposed on top of the cell case 110, the contact portion may be disposed on bottom of the cell case 110. That is, the cooler 300 may contact the lower end portion 111a of the cell case 110.

In this case, when the thermal insulator 200 is disposed on top of the cell case 110, the cooler 300 may be disposed opposite the thermal insulator 200, thereby effectively maintaining the cooling performance of the battery cell 100 by the cooler 300 in normal conditions.

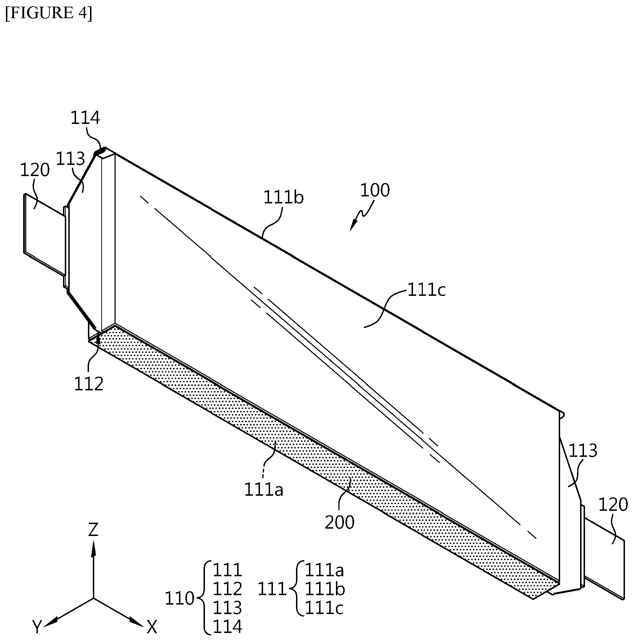

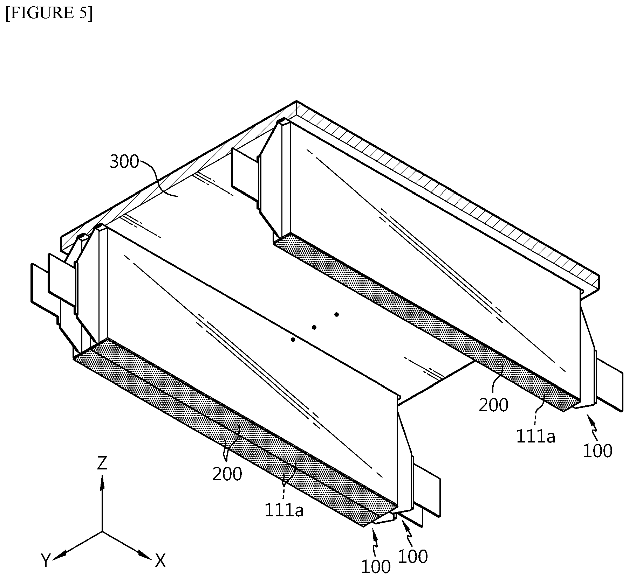

FIG. 4 is a perspective view showing the entire battery cell according to a variation to an embodiment of the present disclosure, and FIG. 5 is a perspective view showing the cooler positioned on top of the battery cell according to the variation to an embodiment of the present disclosure.

Hereinafter, the battery cell 100 according to the variation to an embodiment of the present disclosure will be described in detail with reference to FIGS. 1, 4 and 5.

In the battery cell 100 according to the variation to an embodiment of the present disclosure, the thermal insulator 200 may be disposed on bottom of the cell case 110. Specifically, the thermal insulator 200 may be disposed on the lower end portion 111a of the housing portion 111. The thermal insulator 200 may be coupled to the lower end portion 111a of the housing portion 111.

In this case, when the thermal event occurs in the battery cell 100, the surface area of the lower part of the electrode assembly exposed to high temperature and the time until the exposure to high temperature may be minimized, thereby effectively slowing down and preventing thermal propagation, especially at the lower part of the battery cell 100.

As described above, when the thermal insulator 200 is disposed on bottom of the cell case 110, the contact portion may be disposed on top of the cell case 110. That is, the cooler 300 may contact the upper end portion 111b of the cell case 110.

In this case, when the thermal insulator 200 is disposed on bottom of the cell case 110, the cooler 300 may be disposed opposite the thermal insulator 200, thereby effectively maintaining the cooling performance of the battery cell 100 by the cooler 300 in normal conditions.

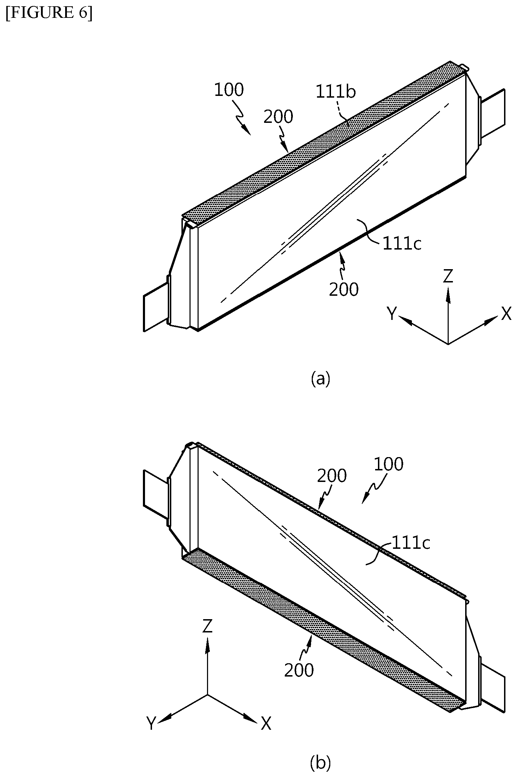

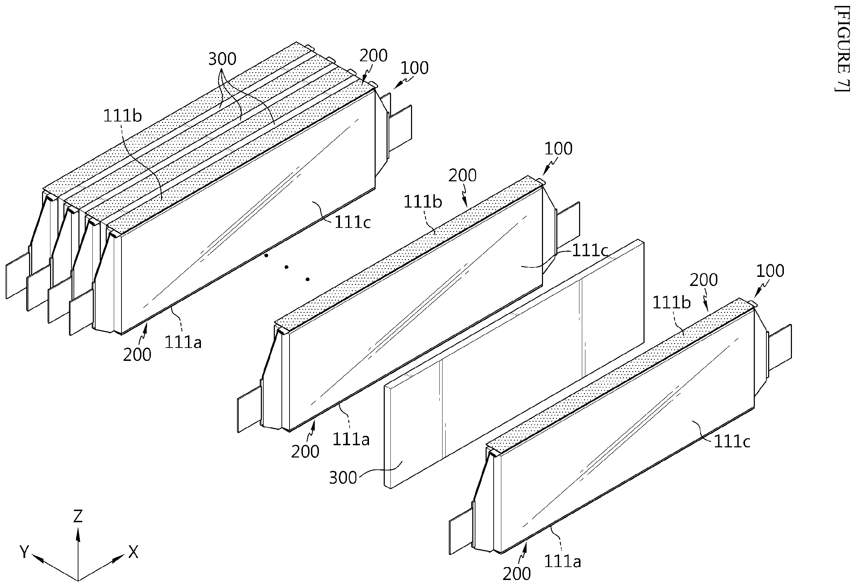

FIG. 6 is a perspective view showing the entire battery cell according to another variation to an embodiment of the present disclosure, and FIG. 7 is a perspective view showing the cooler positioned on the side portion of the battery cell according to another variation to an embodiment of the present disclosure.

Hereinafter, the battery cell 100 according to another variation to an embodiment of the present disclosure will be described in detail with reference to FIGS. 1, 6 and 7.

In the battery cell 100 according to another variation to an embodiment of the present disclosure, the thermal insulator 200 may be disposed on top and bottom of the cell case 110. Specifically, the thermal insulator 200 may be disposed on each of the upper end portion 111b and the lower end portion 111a of the housing portion 111. The thermal insulator 200 may be coupled to each of the upper end portion 111b and the lower end portion 111a of the housing portion 111.

In this case, when the thermal event occurs in the battery cell 100, the surface area of each of the upper and lower parts of the electrode assembly exposed to high temperature and the time until the exposure to high temperature may be minimized, thereby effectively slowing down and preventing thermal propagation, especially at the upper and lower parts of the battery cell 100.

As described above, when the thermal insulator 200 is disposed on top and bottom of the cell case 110, the contact portion may be disposed on at least one of the two side portions 111c of the cell case 110. That is, the cooler 300 may contact one side portion 111c of the cell case 110. Specifically, the cooler 300 may be disposed on at least one of the two side portions 111c of the cell case 110 in the stacking direction of the electrode assembly. For example, as shown in FIG. 7, the cooler 300 may be disposed on the two side portions 111c of the battery cell 100, or unlike FIG. 7, the cooler 300 may be disposed on any one of the two side portions 111c of the battery cell 100 (for example, one cooler 300 every two battery cells 100. The side portion 111c of the battery cell 100 and the cooler 300 may be in surface contact with each other.

In this case, when the thermal insulator 200 is disposed on each of the top and bottom of the cell case 110, the cooler 300 may be disposed at a different location from the location of the thermal insulator 200, i.e., disposed on the side portion 111c of the cell case 110, thereby effectively maintaining the cooling performance of the battery cell 100 by the cooler 300 in normal conditions.

Referring back to FIGS. 2, 4 and 6, in the battery cell 100 according to the present disclosure, the thermal insulator 200 may not be disposed on the terrace portion 113 side.

The battery cell 100 may further include the electrode lead 120. The electrode lead 120 may be electrically connected to the electrode assembly. The electrode lead 120 may form a terminal of the battery cell 100, and may have a first polarity or a second polarity that is the opposite of the first polarity. The electrode lead 120 may extend outward from the cell case 110, and may include at least one electrode lead. The electrode lead 120 may include two electrode leads. Any one of the two electrode leads 120 may have the first polarity and the other may have the second polarity.

The cell case 110 may include the terrace portion 113. The terrace portion 113 may be configured to seal a portion of the sealing portions 113, 114 where the electrode lead 120 is positioned. The terrace portion 113 may be disposed on the electrode lead 120 side of the cell case 110. For example, when the electrode lead 120 extends from -X direction side and +X direction side of the cell case 110, the terrace portion 113 may be disposed on -X direction side and +X direction side of the cell case 110. The terrace portion 113 may cover the electrode lead 120. The terrace portion 113 may seal the electrode lead 120.

The thermal insulator 200 may not be disposed on the terrace portion 113 side.

Referring back to FIGS. 2, 4 and 6, in the battery cell 100 according to the present disclosure, the thermal insulator 200 may be disposed on the outer side of the cell case 110. For example, the thermal insulator 200 may be disposed on the outer side of the upper end portion 111b and/or the lower end portion 111a of the cell case 110. In this case, the thermal insulator 200 may be coupled to the outer side of the cell case 110.

As described above, when the insulating material 200 is disposed on the outer side of the cell case 110, in particular, there is an advantage that the surface area of the outer part of the battery cell 100 exposed to high temperature and the time until the exposure to high temperature may be minimized.

The thermal insulator 200 may seal the cell case 110 from the outside. Specifically, the thermal insulator 200 may be disposed on the outer side of the cell case 110 to seal the cell case 110. In this case, the thermal insulator 200 may be positioned in close contact with the outer side of the cell case 110. For example, the thermal insulator 200 may be positioned in close contact with the outer side of the upper end portion 111b and/or the lower end portion 111a of the cell case 110. In this case, the shape of at least a part of the thermal insulator 200 may conform to the shape of the outer side of the cell case 110.

As described above, when the thermal insulator 200 is configured to seal the cell case 110 from the outside, there is an advantage that the surface area of the battery cell 100 exposed to high temperature and the time until the exposure to high temperature may be further minimized.

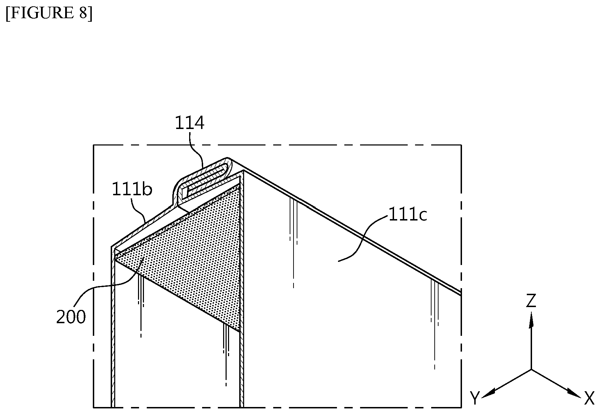

FIG. 8 is a perspective view showing the thermal insulator present on the inner side of the cell case in the battery cell according to an embodiment of the present disclosure.

Referring to FIG. 8, in the battery cell 100 according to the present disclosure, the thermal insulator 200 may be disposed on the inner side of the cell case 110. For example, as shown in FIG. 8, the thermal insulator 200 may be disposed on the inner side of the upper end portion 111b of the cell case 110. Although not shown in the drawing, the present disclosure does not preclude the thermal insulator 200 disposed on the inner side of the lower end portion 111a of the cell case 110.

The battery cell 100 may be assembled through processes of placing the electrode assembly in position within the unfolded cell case 110 and folding and sealing the cell case 110, and in this case, before the process of folding and sealing the cell case 110, the thermal insulator 200 may be placed on the inner side of the cell case 110 in advance.

As described above, when the thermal insulator 200 is disposed on the inner side of the cell case 110, in particular, there is an advantage that the surface area of the inner part of the battery cell 100 exposed to high temperature and the time until the exposure to high temperature may be minimized. In addition, because the battery cell 100 may be compressed in the process of manufacturing the battery cell 100, there is also an advantage that the thermal insulator 200 may be easily attached and held closely between the cell case 110 and the electrode assembly when it is placed on the inner side of the cell case 110.

The thermal insulator 200 may form a seal between the cell case 110 and the electrode assembly. Specifically, the thermal insulator 200 may be disposed on the inner side of the cell case 110 to form a seal between the cell case 110 and the electrode assembly. In this case, the thermal insulator 200 may be positioned in close contact with the inner side of the cell case 110. For example, the width (Y direction) and the length (X direction) of the thermal insulator 200 may almost match the inner width (Y direction) and the inner length (X direction) of the cell case 110, to bring the thermal insulator 200 into close contact with the inner side of the cell case 110. In contrast, for example, when the width (Y direction) or length (X direction) of the thermal insulator 200 is smaller than the inner width (Y direction) or inner length (X direction) of the cell case 110, a sealer may be provided at the edge of the thermal insulator 200 to bring the thermal insulator into close contact with the inner side of the cell case 110. In addition, the shape of at least a part of the thermal insulator 200 may conform to the inner shape of the cell case 110.

As described above, when the thermal insulator 200 is configured to form a seal between the cell case 110 and the electrode assembly, there is an advantage that the surface area of the battery cell 100 exposed to high temperature and the time until the exposure to high temperature may be further minimized.

Unlike the above description, the thermal insulator 200 may be disposed on each of the outer side and the inner side of the cell case 110. In this case, there may be an advantage that the surface area of the outer part and the inner part of the battery cell 100 exposed to high temperature and the time until the exposure to high temperature may be minimized.

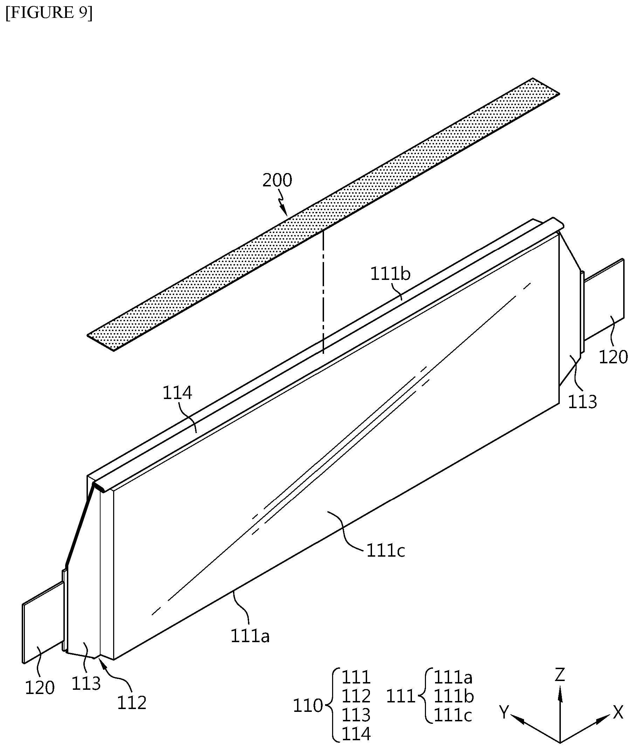

FIG. 9 is an exploded perspective view showing the tape-type thermal insulator in the battery cell according to still another variation to an embodiment of the present disclosure.

Hereinafter, the battery cell 100 according to still another variation to an embodiment of the present disclosure will be described in detail with reference to FIG. 9.

The battery cell 100 according to still another variation to an embodiment of the present disclosure may include the thermal insulator 200 in the shape of a tape. When the thermal insulator 200 is provided in the shape of a tape, the thermal insulator 200 may be closely attached to the cell case 110. The tape-type thermal insulator 200 may be attached to the upper end portion 111b and/or the lower end portion 111a of the cell case 110, and may be attached to the outer side and/or the inner side of the cell case 110.

As described above, when the thermal insulator 200 is provided in the shape of a tape, the thermal insulator 200 may be disposed on the cell case 110 more easily and firmly. In addition, the sealing of the cell case 110 may be enhanced by the thermal insulator 200. In addition, due to the small volume occupied by the thermal insulator 200, energy density of the battery cell 100 may be improved.

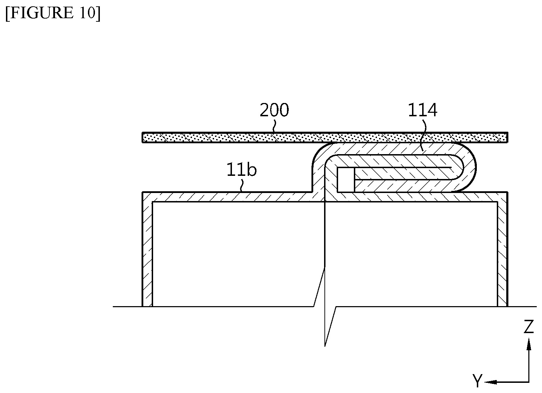

FIG. 10 is a side cross-sectional view showing the thermal insulator positioned in close contact with the folding portion of the cell case in the battery cell according to an embodiment of the present disclosure.

Referring to FIG. 10, the thermal insulator 200 may be positioned in close contact with the folding portion 114. The thermal insulator 200 may be disposed to apply pressure to the folding portion 114. As described above, the folding portion 114 may be provided such that parts are folded. Specifically, the folding portion 114 may be formed by folding the cell case 110 to bring any two ends of the unfolded cell case 110 into contact with each other to form the upper end portion 111b of the cell case 110, and bending and folding a part of the upper end portion 111b.

The thermal insulator 200 may be positioned in close contact with the folding portion 114, and in this case, the thermal insulator 200 may apply pressure to the folding portion 114. As the thermal insulator 200 applies pressure to the folding portion 114, more effective sealing of the folding portion 114 side may be achieved, and the volume of the thermal insulator 200 and the battery cell 100 may be reduced, thereby improving energy density of the battery cell 100.

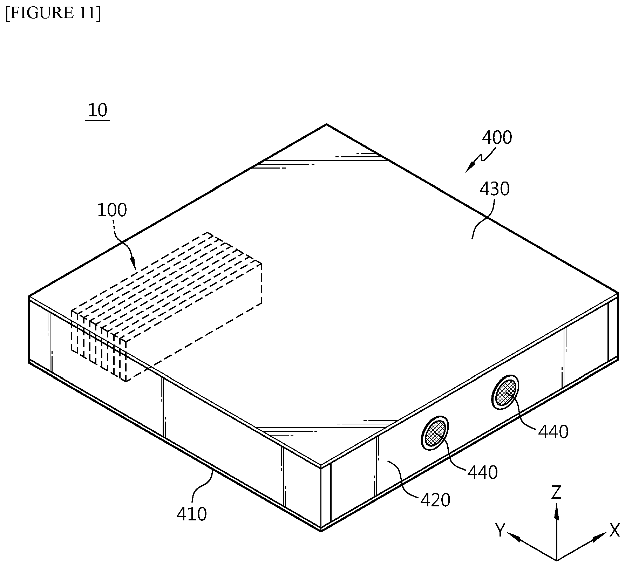

FIG. 11 is a perspective view showing a battery pack according to an embodiment of the present disclosure.

The battery pack 10 according to the present disclosure may include at least one battery cell 100 according to the present disclosure. The battery pack 10 according to the present disclosure may include a plurality of battery cells 100 according to the present disclosure. In the battery pack 10, the plurality of battery cells 100 may form a module unit. Alternatively, in the battery pack 10, the plurality of battery cells 100 may form a so-called cell-to-pack structure, not a module unit.

Meanwhile, in the battery pack 10 according to the present disclosure, the plurality of battery cells 100 may be stacked. For example, the plurality of battery cells 100 may be stacked along the width direction (Y-axis direction) of the battery cells 100.

Meanwhile, the battery pack 10 according to the present disclosure may further include the cooler 300 described above.

Meanwhile, the battery pack 10 according to the present disclosure may further include a pack case 400. The pack case 400 may have a space in which at least one battery cell 100 is housed. The pack case 400 may include a bottom portion 410, a sidewall portion 420 and a pack cover 430. The bottom portion 410 may form the bottom of the pack case 400, the sidewall portion 420 may be disposed around the bottom portion 410 to form the space in which the battery cell 100 is housed, and the pack cover 430 may be coupled to the sidewall portion 420 to cover the pack case 400. Although not shown, the pack case 400 may further include a partition frame to partition the space in which the battery cells 100 are housed. The pack case 400 may further include a venting device 440 to release high temperature venting gas into the atmosphere when the thermal event occurs in the battery cell 100.

Although not shown, the battery pack 10 according to the present disclosure may further include a variety of devices to control the charge and discharge of the battery cells 100, for example, a Battery Management System (BMS), a current sensor or a fuse.

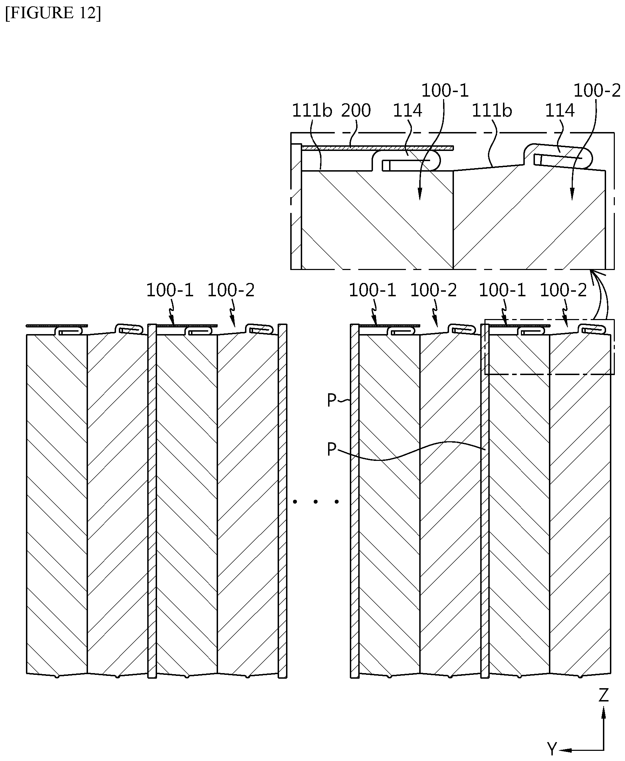

FIG. 12 is a side cross-sectional view showing the battery pack according to another embodiment of the present disclosure.

Referring to FIGS. 11 and 12, the battery pack 10 according to another embodiment of the present disclosure may include at least one first battery cell 100-1 and at least one second battery cell 100-2.

Each of the first battery cell 100-1 and the second battery cell 100-2 may include the electrode assembly and the cell case 110 that are the same as the electrode assembly and the cell case 110 of the battery cell 100 according to the present disclosure described above. The battery pack 10 according to another embodiment of the present disclosure may further include the pack case 400 as shown in FIG. 11, and the pack case 400 may accommodate the first battery cell 100-1 and the second battery cell 100-2.

However, the first battery cell 100-1 and the second battery cell 100-2 may be different from each other depending on the presence or absence of the thermal insulator 200. Specifically, in the battery pack 10 according to another embodiment of the present disclosure, any one of the first battery cell 100-1 and the second battery cell 100-2 may include the thermal insulator 200.

For example, as shown in FIG. 12, the first battery cell 100-1 and the second battery cell 100-2 may be arranged in an alternating manner, and the thermal insulator 200 may be disposed on the upper end portion 111b of the first battery cell 100-1, and the thermal insulator 200 may not be disposed on the second battery cell 100-2. For example, unlike FIG. 12, the thermal insulator 200 may be disposed on the lower end portion 111a of the first battery cell 100-1, and the thermal insulator 200 may be disposed on the second battery cell 100-2, but not the first battery cell 100-1.

In addition, the cell case 110 of any one of the first battery cell 100-1 and the second battery cell 100-2 including the thermal insulator 200 may include the contact portion disposed at a different location from the location of the thermal insulator 200, the contact portion being configured to contact the cooler 300.

However, the above description is for illustrative purposes only, and the battery pack 10 according to another embodiment of the present disclosure should be understood as encompassing many different cases, for example, the battery pack 10 including at least one first battery cell 100-1 and at least one second battery cell 100-2, wherein any one of the first battery cell 100-1 and the second battery cell 100-2 includes the thermal insulator 200 and the other does not include the thermal insulator 200.

In the battery pack 10 described above, the presence or absence of the thermal insulator 200 may be differently designed for each battery cell 100, thereby increasing design diversity and scalability of the battery pack 10.

Meanwhile, the battery pack 10 may further include the cooler 300.

Meanwhile, the battery pack 10 may further include a partition P between any two adjacent battery cells 100. The partition P may separate any two adjacent battery cells 100. The partition P may divide the plurality of battery cells 100 into a so-called bank unit. The partition P may be, for example, a barrier, and the barrier may include a fire-resistant material. The partition P may be, for example, the cooler 300. The partition P may be, for example, the cooler 300 positioned on the side portion111c of the cell case 110 of the battery cell 100 as shown in FIG. 7.

FIG. 13 is a side cross-sectional view showing the battery pack according to still another embodiment of the present disclosure.

Referring to FIGS. 11 and 13, the battery pack 10 according to still another embodiment of the present disclosure may include at least one first battery cell 100-1 and at least one second battery cell 100-2. (It should be understood that the first battery cell 100-1 and the second battery cell 100-2 of the battery pack 10 according to still another embodiment of the present disclosure are different from the first battery cell 100-1 and the second battery cell 100-2 of the battery pack 10 according to another embodiment of the present disclosure.)

Each of the first battery cell 100-1 and the second battery cell 100-2 may include the electrode assembly, the cell case 110 and the thermal insulator 200 that are the same as the electrode assembly, the cell case 110 and the thermal insulator 200 of the battery cell 100 according to the present disclosure described above. The battery pack 10 according to still another embodiment of the present disclosure further includes the pack case 400 as shown in FIG. 11, and the pack case 400 may accommodate the first battery cell 100-1 and the second battery cell 100-2.

However, the first battery cell 100-1 and the second battery cell 100-2 may be different from each other depending on the location of the thermal insulator 200. Specifically, in the battery pack 10 according to still another embodiment of the present disclosure, the thermal insulator 200 of the first battery cell 100-1 and the thermal insulator 200 of the second battery cell 100-2 may be positioned at different locations.

For example, as shown in FIG. 13, the first battery cell 100-1 and the second battery cell 100-2 may be arranged in an alternating manner, and the thermal insulator 200 may be disposed on the upper end portion 111b of the first battery cell 100-1, and the thermal insulator 200 may be disposed on the lower end portion 111a of the second battery cell 100-2. For example, unlike FIG. 13, the thermal insulator 200 may be disposed on the lower end portion 111a of the first battery cell 100-1, and the thermal insulator 200 may be disposed on the upper end portion 111b of the second battery cell 100-2.

In addition, the cell case 110 of each of the first battery cell 100-1 and the second battery cell 100-2 may include the contact portion disposed at a different location from the location of the thermal insulator 200, the contact portion being configured to contact the cooler 300.

However, the above description is for illustrative purposes only, and the battery pack 10 according to still another embodiment of the present disclosure should be understood as encompassing many different cases, for example, the battery pack 10 including at least one first battery cell 100-1 and at least one second battery cell 100-2, wherein the location of the thermal insulator 200 of any one of the first battery cell 100-1 and the second battery cell 100-2 is different from the location of the thermal insulator 200 of the other battery cell 100.

In the battery pack 10 described above, the location of the thermal insulator 200 may be differently designed for each battery cell 100, thereby increasing design diversity and scalability of the battery pack 10.

Meanwhile, the battery pack 10 may further include the cooler 300.

The above description presents examples of the battery cell 100 and the battery pack 10 according to the present disclosure. The technical aspects of the present disclosure are not limited to these examples, and may include a combination of any two or more thereof.

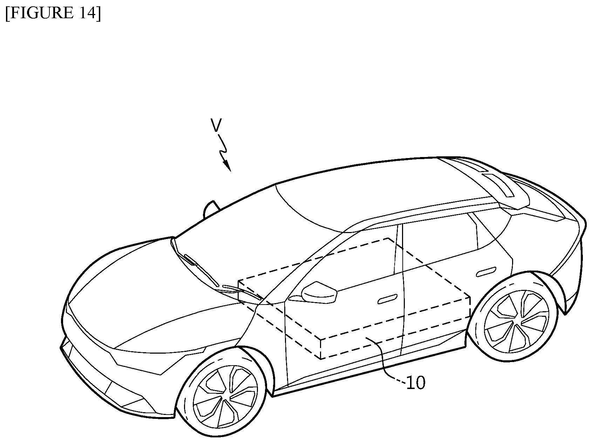

FIG. 14 is a diagram showing a vehicle according to an embodiment of the present disclosure.

Hereinafter, referring to FIG. 14, the battery pack 10 according to the present disclosure may be applied to the vehicle V such as an electric vehicle or a hybrid electric vehicle. That is, the vehicle V according to the present disclosure may include the battery pack 10 according to the present disclosure. The battery pack 10 may be installed in a vehicle body frame under a vehicle seat or a trunk space. In addition to the battery pack 10, the vehicle V according to an embodiment of the present disclosure may further include any other component included in the vehicle. For example, in addition to the battery pack 10 according to an embodiment of the present disclosure, the vehicle V according to an embodiment of the present disclosure may further include a vehicle body, a motor or a controller such as an electronic control unit (ECU).

In addition, in addition to the vehicle V, the battery pack 10 according to an embodiment of the present disclosure may be used in any other device, apparatus and machine using secondary batteries, for example, energy storage systems.

In this specification, the terms indicating the directions such as up, down, left, right, front and rear are used, but these terms are for the purpose of convenience of description only, and it is obvious to those skilled in the art that the terms may be subject to change depending on the location of an object or an observer.

Although the present disclosure has been hereinabove described with regard to certain embodiments and drawings, the present disclosure is not limited thereto, and it is apparent that a variety of modifications and change may be made by persons having ordinary skill in the technical field pertaining to the present disclosure within the technical aspects of the present disclosure and the appended claims and their equivalents.

### [List of Reference Numerals]

10: Battery pack
100: Battery cell
110: Cell case
111: Housing portion
111a: Lower end portion
111b: Upper end portion
111c: Side portion
112: Bridge
113: Terrace portion
114: Folding portion
120: Electrode lead
200: Thermal insulator
300: Cooler
400: Pack case
410: Bottom portion
420: Sidewall portion
430: Pack cover
440: Venting device
P: Partition
V: Vehicle

## Claims

1. A battery cell comprising:
an electrode assembly including a positive electrode, a negative electrode and a separator stacked along a stacking direction;
a cell case accommodating the electrode assembly; and
a thermal insulator disposed on one remaining side of the cell case except two side portions in the stacking direction of the electrode assembly, the thermal insulator including a thermal insulation material,
wherein the cell case includes:
a contact portion disposed at a different location from a location of the thermal insulator, the contact portion configured to contact a cooler.

2. The battery cell according to claim 1,
wherein the thermal insulator has a predetermined thickness.

3. The battery cell according to claim 1,
wherein the thermal insulator is disposed on top of the cell case.

4. The battery cell according to claim 3,
wherein the contact portion is disposed on bottom of the cell case.

5. The battery cell according to claim 1,
wherein the thermal insulator is disposed on bottom of the cell case.

6. The battery cell according to claim 5,
wherein the contact portion is disposed on top of the cell case.

7. The battery cell according to claim 1,
wherein the thermal insulator is disposed on top and bottom of the cell case.

8. The battery cell according to claim 7,
wherein the contact portion is disposed on at least one of the two side portions of the cell case in the stacking direction of the electrode assembly.

9. The battery cell according to claim 1,
wherein the thermal insulator is disposed on an inner side of the cell case.

10. The battery cell according to claim 1,
wherein the thermal insulator is disposed on an outer side of the cell case.

11. The battery cell according to claim 1,
wherein the thermal insulator is provided in a shape of a tape.

12. The battery cell according to claim 1,
wherein the thermal insulator includes at least one material of mica, aerogel or silicone.

13. A battery pack comprising at least one battery cell according to claims 1 to 12.

14. A battery pack comprising:
at least one first battery cell and at least one second battery cell, each battery cell including:
an electrode assembly including a positive electrode, a negative electrode and a separator stacked along a stacking direction; and
a cell case accommodating the electrode assembly,
wherein any one of the first battery cell and the second battery cell includes:
a thermal insulator disposed on one remaining side of the cell case except two side portions in the stacking direction, the thermal insulator including a thermal insulation material, and
wherein the cell case of the any one of the first battery cell and the second battery cell includes:
a contact portion disposed at a different location from a location of the thermal insulator, the contact portion configured to contact a cooler.

15. A battery pack comprising:
at least one first battery cell and at least one second battery cell, each battery cell including:
an electrode assembly including a positive electrode, a negative electrode and a separator stacked along a stacking direction;
a cell case accommodating the electrode assembly; and
a thermal insulator disposed on one remaining side of the cell case except two side portions in the stacking direction, the thermal insulator including a thermal insulation material,
wherein the thermal insulator of the first battery cell and the thermal insulator of the second battery cell are disposed at different locations, and
wherein the cell case of each of the first battery cell and the second battery cell includes:
a contact portion disposed at a different location from the location of the thermal insulator, the contact portion configured to contact a cooler.

16. A vehicle comprising at least one battery pack according to claim 13.
